# EUROPÄISCHE PATENTSCHRIFT

(11) **EP 2 514 611 B1**
(45) Veröffentlichungstag und Bekanntmachung des Hinweises auf die Patenterteilung: **07.05.2014**
(21) Anmeldenummer: 11192490.8
(22) Anmeldetag: 07.12.2011
(51) Int. Cl.: B60C 25/05, B25J 15/10, B60C 25/132, B25J 15/02

(54) **Verfahren und Vorrichtung zur Montage eines Luftreifens mit Hilfe eines Roboters**
Method and device for mounting a pneumatic tyre with the use of a robot
Dispositif et procédé de montage d'un pneu à l'aide d'un robot

(30) Priorität: 19.04.2011 DE 102011002180
(43) Veröffentlichungstag der Anmeldung: 24.10.2012
(73) Patentinhaber: Schenck RoTec GmbH, 64293 Darmstadt (DE)
(72) Erfinder: Rogalla, Martin, 64297 Darmstadt (DE); Lipponer, Georg, 64673 Zwingenberg (DE); Peinelt, Andreas, 64319 Pfungstadt (DE); Lemser, Matthias, 64331 Weiterstadt (DE); Weißbach, Kevin, 09423 Gelenau (DE)
(74) Vertreter: Haar, Lucas Heinz Jörn

(56) Entgegenhaltungen:
- EP-A1- 1 916 124
- EP-A1- 1 927 483
- US-A1- 2008 066 873

## Beschreibung

Die Erfindung betrifft ein Verfahren zur Montage eines Luftreifens auf eine Tielbettfelge eines Fahrzeugrades, bei welchem der Luftreifen in einer Bereitstellungsposition mittels eines an einem Handhabungsroboter angeordneten Greifers an der Lauffläche erfasst, von dem Handhabungsroboter an die in einer Spannvorrichtung gehaltene Felge herangeführt und durch eine kontrollierte Bewegung des den Luftreifen haltenden Greifers mit dem der Felge zugekehrten ersten Reifenwulst über ein Felgenhorn der Felge gestreift wird. Die Erfindung betrifft weiterhin eine Vorrichtung zur Durchführung des Verfahrens.

Ein Verfahren der angegebenen Art zur automatischen Montage von Luftreifen auf Tiefbettfelgen ist aus EP 1 738 937 A2 bekannt. Die Handhabung und Montage der Luftreifen erfolgt hierbei mit Hilfe eines Greifers, der an einem Schwenkarm oder einer Roboterhand eines Handhabungsroboters angebracht und so gestaltet ist, dass er die Luftreifen am Außenumfang im Bereich der Lauffläche greifen und halten kann und sich an einer Seitenwand der Luftreifen abstützen kann. Durch eine gesteuerte Bewegung des Greifers kann nach dem bekannten Verfahren ein Reifen mit nur einem Reifenwulst, in geeigneten Fällen auch mit beiden Reifenwülsten montiert werden. Ist die Montage beider Reifenwülste nach dem Verfahren schwierig, so kann der erste Reifenwulst mit Hilfe des Handhabungsroboters und des Greifers und der zweite Reifenwulst in einer nachgeschalteten Montageeinrichtung mit an dem Felgenhorn entlanggeführten Aufziehwerkzeugen auf herkömmliche Weise erfolgen.

Bei einem aus EP 1 916 124 A1 bekannten Verfahren zum maschinellen Montieren von Fahrzeugrädern wird die Felge oder das Scheibenrad in einer horizontalen Lage mittels einer Spannvorrichtung festgehalten. Der Luftreifen wird schräg auf die Felge aufgelegt und so weit an die Felge herangeschoben, dass der untere Reifenwulst mit einem unteren Abschnitt in das Tiefbett der Felge gedrückt wird, während er mit seinem oberen Abschnitt über das obere Felgenhorn hinausragt. Anschließend werden von oben Aufziehwerkzeuge auf den Reifen und die Felge abgesenkt. Durch Rotation der Aufziehwerkzeuge um die Drehachse der Felge wird dann der Reifenwulst kontinuierlich über das obere Felgenhorn gezogen. Für die Montage des zweiten oberen Reifenwulstes wird der Vorgang wiederholt.

Aus EP 1 054 783 B1 sind ein Verfahren und eine Vorrichtung bekannt, bei welchen zunächst die Felge in einer Reifenmontagestation festgespannt und anschließend der Reifen in vorbestimmter exzentrischer Lage auf die Felge aufgelegt und mit einer Klemme festgehalten wird. Ein Werkzeug zur Montage des Reifenwulstes, das an einem Gelenkarm eines Roboters angeordnet ist, wird mit dem Reifen in Eingriff gebracht und auf einem programmierten Pfad um die Felge herumgeführt, um den ersten Wulst über den Rand der Felge zu streifen. Nachdem das Werkzeug annähernd 360° in Bezug auf die Felge durchlaufen hat, wird es mit dem zweiten Wulst des Reifens in Eingriff gebracht und entlang eines zweiten programmierten Pfades bewegt, wobei es eine zweite Bewegung um den gesamten Umfang der Felge herum ausführt, um den zweiten Wulst auf die Felge zu montieren.

Weiterhin ist aus DE 10 2006 0571 71 A1 eine Vorrichtung zur Montage eines Luftreifens auf eine Felge eines Fahrzeugrades mit einem Handhabungsroboter bekannt, der eine um mehrere Achsen bewegbare Roboterhand mit einem drehend antreibbaren Flansch und einen an der Roboterhand angebrachten Greifer aufweist, der einen Grundkörper und radial zur Mittelachse des Greifers bewegbare Greiferarme hat, die mit einer Synchronisiereinrichtung gekoppelt sind, welche die radiale Bewegung der Greiferarme synchronisiert. Die Synchronisiereinrichtung weist eine an dem Grundkörper drehbar gelagerte, durch einen Motor drehend antreibbare Scheibe und Kuppelglieder auf, die mittels Gelenken an der Scheibe und den Greiferarmen derart befestigt sind und bei Drehung der Scheibe eine synchrone, radiale Bewegung der Greiferarme bewirken.

Der Erfindung liegt die Aufgabe zugrunde, ein Verfahren zur Reifenmontage der eingangs genannten Art anzugeben, das kostengünstig durchführbar ist und für eine Vielzahl von Luftreifenvarianten geeignet ist. Weiterhin besteht das Ziel, eine Vorrichtung zu schaffen, welche die komplette Reifenmontage in einer Aufspannung der Felge in kurzer Zeit ermöglicht.

Nach der Erfindung wird die Aufgabe hinsichtlich des Verfahrens durch die in Anspruch 1 angegebenen Merkmale und hinsichtlich der Vorrichtung durch die in Anspruch 2 angegebenen Merkmale gelöst. Vorteilhafte Weiterbildungen der Vorrichtung sind in den Ansprüchen 3 bis 14 angegeben.

Bei dem Verfahren nach der Erfindung wird der Luftreifen in einer Bereitstellungsposition mittels eines an einem in drei Richtungen bewegbaren Gelenkarm eines Handhabungsroboters angeordneten Greifers an der Lauffläche erfasst, von dem Handhabungsroboter an die in einer Spannvorrichtung gehaltene Felge herangeführt und durch eine kontrollierte Bewegung des den Luftreifen haltenden Greifers mit dem der Felge zugekehrten ersten Reifenwulst über ein Felgenhorn der Felge gestreift. Anschließend wird der Greifer von dem Luftreifen gelöst und der Reifen mittels Stellgliedern, wie Reifenheber und Reifenschieber, die an der Spannvorrichtung angeordnet sind, in eine geeignete Ausgangsposition für die Montage des zweiten Reifenwulstes bewegt. Danach wird der Reifenheber in seine Ausgangsposition abgesenkt. An dem Greifer angeordnete Montagewerkzeuge werden dann durch Bewegen des Greifers in eine Arbeitsposition an der in der Spannvorrichtung gehaltenen Felge gebracht und durch eine Drehbewegung des Greifers um die Achse der Felge an dem Felgenhorn entlang geführt, wobei der zweite Reifenwulst mittels der Montagewerkzeuge über das Felgenhorn der Felge gestreift wird.

Das Verfahren nach der Erfindung hat den Vorteil, dass mit verhältnismäßig kleinem Aufwand an Maschinen eine vollautomatische Reifenmontage ermöglicht wird. Der gesamte, die Zuführung des Reifens zur Montagestation, die Beseifung der Reifenwülste, das Aufziehen beider Reifenwülste und das Abfördern des montierten Rades umfassende Montagevorgang kann in einem Zug mittels einer einzigen Montagestation durchgeführt werden. Das Verfahren hat weiterhin den Vorteil, dass es sich für verschiedene Rad- und Reifentypen sowie Rad- und Reifengrößen eignet und dass verschiedene Reifen- und Radtypen in wechselnder Folge ohne aufwändige Umrüstmaßnahmen verarbeitet werden können. Weiterhin lassen sich kurze Zeiten für die Durchführung eines Montagezyklus erzielen.

Eine vorteilhafte Vorrichtung zur Durchführung des Verfahrens umfasst nach der Erfindung eine Handhabungsroboter mit einem in drei Richtungen bewegbaren Gelenkarm, der an seinem freien Ende einen Greifer mit wenigstens zwei, radial zur Mittelachse des Greifers bewegbaren Greiferarmen zum Greifen und Halten von Luftreifen aufweist, und eine Montagestation, die im Arbeitsbereich der Handhabungsroboter angeordnet ist und Spannmittel zum lösbaren Halten einer Felge und Stellglieder zum Positionieren des Luftreifens gegenüber der Felge aufweist, wobei der Greifer an dem Gelenkarm um die Mittelachse und um wenigstens eine weitere Achse mit Hilfe von Stellantrieben drehbar und in beliebigen Drehwinkelstellungen feststellbar ist, wobei an dem der Greifer Werkzeuge zum Aufziehen eines Reifenwulstes auf eine Felge angeordnet sind und der Greifer mit Hilfe des Stellantriebs und gegebenenfalls des Gelenkarms auf einer Kreisbahn derart bewegbar ist, dass die Werkzeuge an dem Felgenhorn der Felge entlang geführt werden können.

Die Vorrichtung nach der Erfindung zeichnet sich durch geringe Herstellkosten aus, da zusätzliche Fördereinrichtungen zum Zuführen der Luftreifen zur Montagestation und zum Abfördern der montierten Räder entfallen können. Weiterhin ist nur eine Montagestation mit Spannmitteln zum Halten der Felge und Stellgliedern zur Positionierung des Luftreifens in der Montagestation erforderlich.

Mit der Vorrichtung nach der Erfindung können Luftreifen nach dem erfindungsgemäßen Verfahren auf eine Felge montiert werden, die Montage kann aber auch vollständig auf herkömmliche Weise erfolgen, indem beide Reifenwülste mit Hilfe der an dem Greifer angeordneten Werkzeuge montiert werden.

Nach einem weiteren Vorschlag der Erfindung können die Werkzeuge zum Aufziehen eines Reifenwulstes an einem Greiferarm angeordnet und die Greiferarme in eine Schließstellung bewegbar sein, in der die freien Enden der Greiferarme sich aneinander abstützen. Diese Gestaltung hat den Vorteil, dass die Werkzeuge das Greifen und Montieren eines Reifens nicht behindern. Durch die Schließstellung, in der die Greiferarme sich aneinander abstützen, wird eine besonders steife Verbindung des die Werkzeuge aufweisenden Greiferarms mit der Handhabungsroboter erzielt. Hierdurch ist gewährleistet, dass die Werkzeuge mit Hilfe des Greifers in geringem Abstand an dem Felgenrand entlang bewegt werden können, ohne diesen zu berühren.

Um die gegenseitige Abstützung der Greiferarme in der Schließstellung weiter zu verbessern, kann vorgesehen sein, dass an den freien Enden der Greiferarme Haltemittel angeordnet sind, die in der Schließstellung der Greiferarme derart ineinander greifen, dass eine Relativbewegung der Greiferarme verhindert wird.

Weiterhin ist vorteilhaft, wenn jeder Greiferfinger eine zur Mittelachse des Greifers parallel ausgerichtete Halteplatte mit parallel zur Mittelachse verlaufenden Rändern aufweist, die Vorsprünge und Ausnehmungen haben, und dass die Halteplatten sich in der Schließstellung der Greiferarme mit ihren Rändern aneinander abstützen, wobei die Vorsprünge und Ausnehmungen ineinander greifen und eine Relativbewegung der Halteplatten in wenigstens einer Richtung verhindern. Nach einem weiteren Vorschlag der Erfindung weist der Greifer einen zentralen Grundkörper auf, an dem die Greiferarme gelagert sind, wobei die Greiferarme mittels einer Synchronisiereinrichtung gekoppelt sind, welche ihre radiale Bewegung synchronisiert, wobei jeder Greiferarm zwei parallele Lenker hat, die jeweils durch Drehgelenke mit ihren einen Enden mit dem Grundkörper und mit ihren anderen Enden mit einer Halteplatte derart drehbar verbunden sind, dass die Lenker eine Parallelführung für die Halteplatte bilden.

Eine alternativer Ausführungsform der erfindungsgemäßen Vorrichtung kann darin bestehen, dass die Greiferarme und die Werkzeuge zum Aufziehen eines Reifenwulstes an einem zentralen Grundkörper des Greifers angeordnet sind, dass die Werkzeuge biegesteif mit dem Grundkörper verbunden sind und dass die Greiferarme in eine gespreizte Stellung bewegbar sind, in der sie sich außerhalb des Arbeitsbereichs der Werkzeuge befinden. Bei dieser Ausgestaltung der Vorrichtung sind die Greiferarme unbelastet, wenn ein Reifenwulst mit Hilfe der Werkzeuge aufgezogen wird. Durch die geringere Belastung der Greiferarme können diese leichter ausgeführt sein. Da die Greiferarme auseinander gespreizt sein müssen, damit sie den Aufziehvorgang nicht behindern, wird bei dieser Ausführungsform ein größerer Freiraum in der Umgebung der Montagestation benötigt.

Zur Steuerung des Öffnens und Schließens des Greifers und der Greiferbewegungen weist der Handhabungsroboter nach der Erfindung eine programmierbare Steuereinrichtung auf. Dies ermöglicht auf einfache Weise die individuelle Anpassung des Montagevorgangs an die jeweilige Form und Größe der Felge und des Reifens. Weiterhin können Belastungssensoren zur Erfassung der bei der Reifenmontage auftretenden Belastungen an dem Handhabungsroboter angeordnet sein. Die Signale der Belastungssensoren können von einer Überwachungseinrichtung überwacht werden, die mit der Steuereinrichtung verbunden ist, um bei Überschreitung von vorgegebenen Belastungswerten die Steuerung des Handhabungsroboters verändern zu können.

Die Erfindung wird nachfolgend anhand von Ausführungsbeispielen näher erläutert, die in der Zeichnung dargestellt sind. Es zeigen
- Figur 1: einen Handhabungsroboter mit einer Vorrichtung nach der Erfindung,
- Figur 2: den Greifer der Vorrichtung gemäß Figur 1,
- Figur 3: das Zuführen eines Luftreifens zu einer von einer Spannvorrichtung gehaltenen Felge,
- Figur 4: den Beginn des Aufziehens des ersten Reifenwulstes mit Hilfe des Greifers,
- Figur 5: die Position des Greifers nach dem Aufziehen des ersten Reifenwulstes,
- Figur 6: die Schließstellung des Greifers für das Aufziehen des zweiten Reifenwulstes,
- Figur 7: die Anfangsposition der an dem Greifer angeordneten Werkzeuge für das Aufziehen des zweiten Reifenwulstes,
- Figur 8: eine Stellung des Greifers während des Aufziehens des zweiten Reifenwulstes,
- Figur 9: eine zweite Ausführungsform einer Vorrichtung nach der Erfindung beim Aufziehen des zweiten Reifenwulstes,
- Figur 10: eine dritte Ausführungsform einer Vorrichtung nach der Erfindung und
- Figur 11: die Ausführungsform gemäß Figur 10 in einer Greiferstellung für das Aufziehen des zweiten Reifenwulstes.

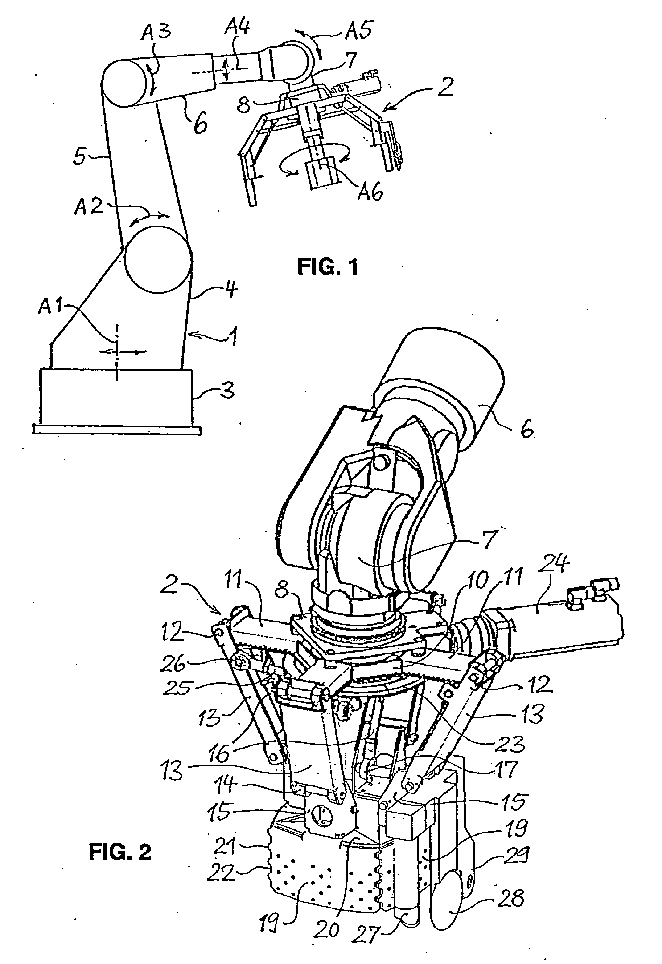

Figur 1 zeigt einen Handhabungsroboter 1 mit einem durch diesen bewegbaren Greifer 2, der zum Greifen und Halten von Luftreifen eingerichtet ist. Der Hand-habungsroboter 1 besteht aus einem feststehenden Grundgestell 3, auf dem sich um eine senkrechte Achse A1 ein Karussell 4 mit einer Schwinge 5, einem Arm 6 und einer Roboterhand 7 dreht. Die Schwinge 5 ist an dem Karussell 4 um eine waagrechte Achse A2 und der Arm 6 ist an der Schwinge 5 um eine waagerechte Achse A3 drehbar. Der Arm 6 besteht aus zwei Teilen, die relativ zueinander um eine in Längsrichtung des Arms 6 verlaufende Achse A4 drehbar sind. Die Roboterhand 7 ist mit dem Arm 6 um eine quer zur Längsachse des Arms 6 verlaufende Achse A5 drehbar verbunden. An ihrem freien Ende hat die Roboterhand 7 einen um eine Achse A6 drehbaren Flansch 8. Alle Achsen A1 bis A6 des Handhabungsroboters 1 sind durch gesteuerte Servomotoren antreibbar. In die Servomotoren sind Bremsen und Resolver zur Drehwinkelmessung integriert. Der Roboter ist mit einer Steuerung ausgerüstet, die frei programmierbar ist und durch die jede der vorgenannten Achsen individuell in eine beliebige Drehwinkelstellung bewegbar und in dieser feststellbar ist. Der Greifer 2 kann mit Hilfe des an der Roboterhand 7 angeordneten Servomotors relativ zur Roboterhand 7 gedreht und drehwinkelgenau positioniert werden.

Der in Figur 2 deutlicher dargestellte Greifer 2 hat einen an dem Flansch 8 befestigten Grundkörper 10 mit vier kreuzförmig angeordneten Armen 11, die sich radial nach außen erstrecken. An den radial äußeren Enden der Arme 11 sind mittels Drehgelenken 12 Greiferarme 13 schwenkbar gelagert. An den freien Enden der Greiferarme 13 sind mittels Drehgelenken 14 Greiferfinger 15 schwenkbar gelagert. Die Achsen der Drehgelenke 12 und 14 jedes Greiferarms 13 sind parallel und zur Mittelachse des Greifers 2 tangential ausgerichtet. Auf der der Greifermitte zugekehrten Seite der Greiferarme 13 sind in einem parallelen Abstand von diesen Lenker 16 angeordnet, die jeweils mit einem Ende durch ein Drehgelenk 17 mit einem Greiferfinger 15 und mit dem anderen Ende durch ein Drehgelenk mit einem Arm 11 verbunden sind. Die Lenker 16 bilden mit den Greiferarmen 13 eine schwenkbare Parallelführung, welche bewirkt, dass die Greiferfinger 15 beim Öffnen und Schließen des Greifers 2 ihre vorgegebene Ausrichtung zur Mittelachse des Greifers 2 beibehalten.

Die Greiferfinger 15 haben jeweils eine zur Mittelachse des Greifers 2 im Wesentlichen parallel ausgerichtete Halteplatte 19, die zur Anlage an der Lauffläche der Luftreifen bestimmt ist. Von der Halteplatte 19 erstreckt sich radial nach innen und senkrecht zu dieser eine Platte 20, mit der sich der Greifer an einer Seitenwand eines Luftreifens abstützen kann. Jede Halteplatte 19 ist an den beiden zur Mittelachse des Greifers 2 parallelen Stirnkanten mit mehreren zahnartigen Vorsprüngen 21 und Vertiefungen 22 versehen. Die Vorsprünge 21 und Vertiefungen 22 einer Stirnkante sind gegenüber den Vorsprüngen 21 und Vertiefungen 22 der anderen Stirnkante derart axial versetzt, dass in der in Figur 2 gezeigten maximalen Schließstellung des Greifers 2, in der die Stirnkanten der Halteplatten 19 aneinander anliegen, die Vorsprünge 21 und Vertiefungen 22 benachbarter Halteplatten 19 spielfrei ineinander greifen und die Halteplatten 19formschlüssig miteinander verbinden. Auf diese Weise bilden die Greiferarme 13 und die Greiferfinger 15 in der maximalen Schließstellung des Greifers 2 mit dem Grundkörper 10 einen steifen fachwerkartigen Körper, der ohne nennenswerte Verformung die zum Aufziehen eines Reifenwulstes erforderlichen Kräfte von der Roboterhand 7 auf Aufziehwerkzeuge übertragen kann.

Zum Öffnen und Schließen des Greifers 2 können die Greiferarme 13 synchron auseinander oder zueinander bewegt werden. Zur Erzeugung dieser synchronen Bewegung ist eine drehbare Scheibe 23 vorgesehen, die an dem Grundkörper 10 um die Mittelachse des Greifers 2 drehbar gelagert ist. An dem Grundkörper 10 ist ein Servomotor 24 angeordnet, der zum Drehen der Scheibe 23 über ein Winkelgetriebe treibend mit der Scheibe 23 verbunden ist. Die Scheibe 23 ist mit jedem Greiferarm 13 durch jeweils ein stangenförmiges Kuppelglied 25 verbunden. Die Kuppelglieder 25 sind gleich lang und tragen an ihren Enden Gelenke 26 mit wenigstens zwei Freiheitsgraden, mit denen sie an der Scheibe 23 und an einem Greiferarme 13 befestigt sind. An der Scheibe 23 sind die Gelenke 26 in einem Winkelabstand von 90° und im gleichen Abstand von der Drehachse der Scheibe 23 angeordnet. Wird die Scheibe 23 durch den Servomotor 24 gedreht, so bewegen sich die mit den Greifarmen 13 verbundenen Gelenke 26 der Kuppelglieder 25 in einer radialen Richtung, wodurch die an den Armen 11 gelagerten Greiferarme 13 eine Schwenkbewegung in der entsprechenden Richtung ausführen.

An einem Greiferfinger 15 sind drei Aufziehwerkzeuge 27, 28, 29 befestigt. Die Aufziehwerkzeuge 27, 28, 29 befinden sich auf der Außenseite der Halteplatte 19 und ragen mit ihren Arbeitsenden über den dem Greiferarm 13 abgekehrten Rand der Halteplatte 19 hinaus. Das Aufziehwerkzeug 27 bildet mit seinem Arbeitsende einen Wulstabweiser, der den Reifenwulst in radialer Richtung von dem Felgenhorn abdrückt. Ihm folgt beim Aufziehvorgang eine Andruckrolle des Aufziehwerkzeugs 28, durch welche der Reifenwulst in das Felgenbett gedrückt wird. Das Aufziehwerkzeug 29 weist am Arbeitsende eine Nachlaufrolle auf, die einen kleineren Durchmesser als die Andruckrolle des Aufziehwerkzeugs 28 hat. Durch ihre Anordnung auf der Außenseite der Halteplatte 19 behindern die Aufziehwerkzeuge 27, 28, 29 die Greiffunktion des Greifers nicht. In der in Figur 2 gezeigten maximalen Schließstellung des Greifers 2 können die Aufziehwerkzeuge zum Aufziehen eines Reifenwulstes verwendet werden, indem der geschlossene Greifer mit Hilfe des Handhabungsroboters 1 derart bewegt wird, dass die Aufziehwerkzeuge 27, 28, 29 auf einer zur Felge konzentrischen Kreisbahn an dem Felgenrand entlang geführt werden.

Im Folgenden wird das Verfahren zur Montage eines Luftreifens auf eine Tiefbettfelge mit Hilfe der beschriebenen Vorrichtung näher erläutert.

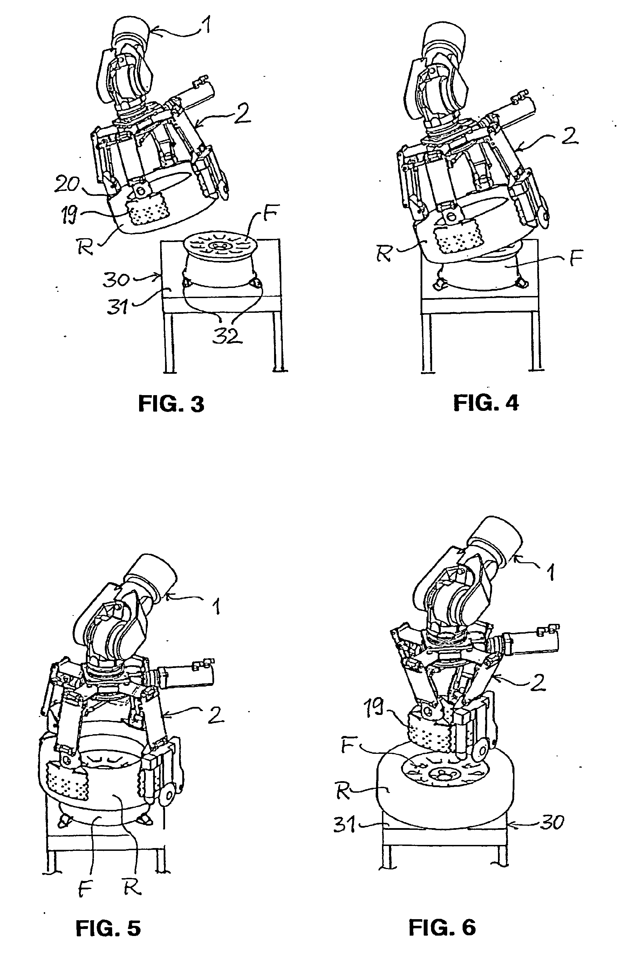

Wie in Figur 3 gezeigt, wird für die Montage eines Reifens R auf eine Felge F die Felge F in einer Spannvorrichtung 30 gespannt. Hierbei wird die Felge mit einem Felgenrand auf einen Tisch 31 der Spannvorrichtung 30 aufgelegt und anschließend mit synchron radial bewegbaren Spannbacken 32 am aufliegenden Felgenrand festgespannt. Der Reifen R wird von einer im Arbeitsbereich des Handhabungsroboters 1 angeordneten, nicht dargestellten Zuführeinrichtung abgeholt, indem der Greifer 2 den Reifen R mit den Halteplatten 19 an der Lauffläche so ergreift, dass die Platten 20 an der Seitenwand des Reifens R anliegen. Der Reifen R wird dann zunächst von dem Handhabungsroboter zu einer Benetzungsstation gefördert, in der die Reifenwülste mit einem Gleitmittel benetzt werden. Anschließend wird der Reifen R, wie in Figur 3 gezeigt, in einer gegenüber der Horizontalen geneigten Schräglage an die Felge F herangeführt und, wie in Figur 4 gezeigt, derart über die Felge gestülpt, dass der obere Felgenrand auf einer Seite in die Öffnung des ersten, der Felge F zugekehrten Reifenwulstes eindringt und der Reifenwulst auf dieser Seite in das Felgenbett gelangt.

Der Reifen R wird dann von dem Greifer 2 unter weiterer Annäherung an die Felge F in eine horizontale Lage bewegt, wobei der erste Reifenwulst vollständig über das Felgenhorn gestreift wird. Der hierdurch erreichte Montagezustand ist in Figur 5 gezeigt.

Zur Montage des zweiten, oberen Reifenwulstes wird der Greifer 2 geöffnet und durch Anheben von dem Reifen R entfernt. Der Reifen R legt sich hierbei auf das untere Felgenhorn und den Tisch 31 auf. Sobald sich der Greifer 2 in genügendem Abstand über dem Reifen R und der Felge F befindet, wird er in die maximale Schließstellung bewegt, in der die Halteplatten 19 aneinander anliegen und durch die ineinander greifenden Vorsprünge 21 und Vertiefungen 22 formschlüssig miteinander verbunden sind. Diese Ausgangslage für die Montage des zweiten Reifenwulstes ist in Figur 6 gezeigt.

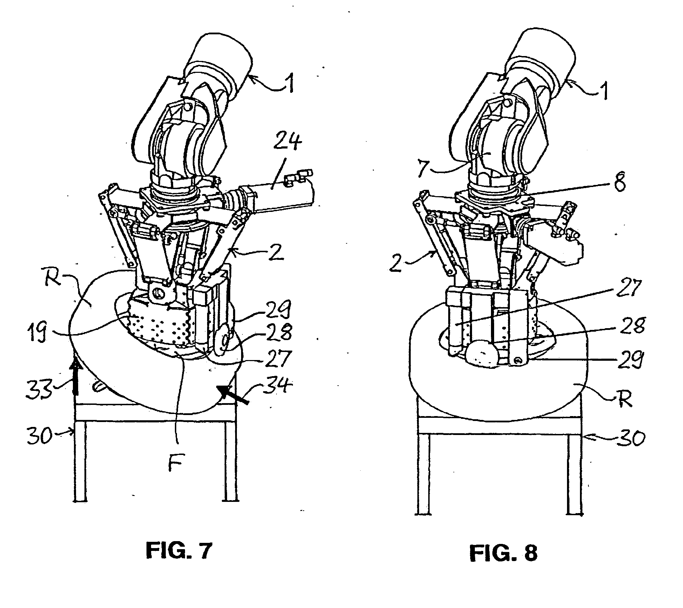

Für das Ansetzen der Aufziehwerkzeuge 27, 28, 29 ist es zunächst erforderlich, den Reifen R mittels eines an der Spannvorrichtung 30 angeordneten Reifenhebers, veranschaulicht durch Pfeil 33, an einer Seite anzuheben und in eine Schräglage zur Felge F zu bringen. Weiterhin wird der Reifen R auf der nicht angehobenen Seite mittels eines radial zur Felge bewegbaren Reifenschiebers, veranschaulicht durch Pfeil 34, so an die Felge herangedrückt, dass der zweite Reifenwulst in das Tiefbett der Felge F eingreift. Der maximal geschlossene Greifer 2 wird dann zur Felge F hinabgesenkt und mit den Aufziehwerkzeugen 27, 28, 29 nahe an dem freiliegenden Rand der Felge F positioniert, ohne jedoch den Felgenrand zu berühren. Diese Montagesituation ist in Figur 7 gezeigt. Die Halteplatten 19 bilden hierbei einen Ring, der sich in genügendem Abstand über der Felge F befindet und einen so kleinen Durchmesser hat, dass er den Reifenwulst nicht berührt.

Nach dem Positionieren der Aufziehwerkzeuge 27, 28, 29 an dem Rand der Felge F wird der Reifenheber 33 wieder in die Ausgangsposition abgesenkt, damit er das Aufziehen des zweiten Reifenwulstes nicht behindert.

Der Greifer 2 wird dann mit dem Aufziehwerkzeug 27 voran auf einer zur Felge F konzentrischen Kreisbahn derart bewegt, dass die tangentiale Ausrichtung der Aufziehwerkzeuge 27, 28, 29 in Bezug auf die Felgenachse unverändert beibehalten wird. In der Regel wird der Radius dieser Kreisbahn größer sein als der Abstand der Aufziehwerkzeuge 27, 28, 29 von der Mittelachse des Greifers 2. Die Bewegung der Aufziehwerkzeuge 27, 28, 29 entlang der Kreisbahn erfordert daher eine Drehung des Greifers 2 mit Hilfe des Flansches 8 der Roboterhand 7 und synchron zu dieser Drehung auch eine Bewegung der Achse des Roboterflansches 8 um die Achse der Felge F. Beide Bewegungen können von der Robotersteuerung anhand der eingegebenen Daten für die Größe und Lage der Felge und für den Abstand der Werkzeuge von der Drehachse des Greifers 2 exakt gesteuert werden.

Figur 8 zeigt die Stellung der Aufziehwerkzeuge 27, 28, 29 nach einer Drehung des Greifers 2 um etwa 90°. Das Aufziehen des zweiten Reifenwulstes ist erst beendet, wenn die Aufziehwerkzeuge 27, 28, 29 nach einer vollen Kreisbewegung ihre Ausgangslage wieder erreicht haben. Der Greifer 2 wird dann angehoben, geöffnet und wieder abgesenkt, um den Reifen R erneut zu greifen. Gleichzeitig wird die Spannvorrichtung 30 geöffnet, so dass der Handhabungsroboter das montierte Rad aus Felge und Reifen zu einer nachfolgenden Bearbeitungsstation, beispielsweise einer Reifenfüllstation, weiterfördern kann.

Die beschriebene Reifenwulstmontage mit Hilfe der am Greifer angeordneten Aufziehwerkzeuge kann auch zur Montage des ersten Reifenwulstes angewendet werden, wenn die Gestaltung des Reifens ein Aufziehen des ersten Reifenwulstes durch gezielte Bewegungen des vom Greifer gehaltenen Reifens nicht zulässt. In einem solchen Fall kann der auf der Felge abgelegte Reifen mit Hilfe der Aufziehwerkzeuge zuerst mit dem ersten Reifenwulst und danach mit dem zweiten Reifenwulst montiert werden.

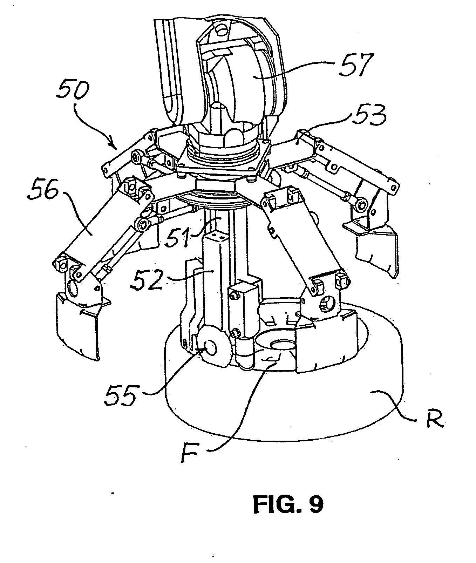

Figur 9 zeigt eine Ausführungsvariante eines Greifers 50, der bis auf die Anordnung der Aufziehwerkzeuge und die Gestaltung der Halteplatten dem Greifer 2 entspricht. Der Greifer 50 weist eine zentrale, sich in Richtung seiner Mittelachse erstreckende Säule 51 auf, an der ein Werkzeugschlitten 52 in Längsrichtung verschiebbar gelagert ist. Mit Hilfe eines Stellantriebs kann der Werkzeugschlitten 52 zwischen einer dem Grundkörper 53 nahen Ruhestellung und einer von dem Grundkörper 53 entfernteren Montagestellung bewegt werden. An dem Werkzeugschlitten 52 sind ein den Wulstabweiser, eine Andruckrolle und eine Nachlaufrolle umfassende Aufziehwerkzeuge 55 angeordnet. Der Greifer 50 ist an einer Roboterhand 57 eines nicht dargestellten Handhabungsroboters angeordnet, der dem Handhabungsroboter 1 im Wesentlichen gleicht. Mit Hilfe des Greifers 50 können alle Greiferoperationen wie das Fördern von Reifen und montierten Rädern und das Aufziehen des ersten Reifenwulstes ausgeführt werden, wenn sich der Werkzeugschlitten 52 in der Ruhestellung nahe dem Grundkörper 53 befindet. Sollen die Aufziehwerkzeuge 55 zum Aufziehen eines Reifenwulstes eingesetzt werden, so wird der Werkzeugschlitten 52 in die in der Zeichnung dargestellte Montageposition gefahren und die Greiferarme 56 werden weit auseinander gespreizt. Auf diese Weise sind die Greiferfinger weit genug von den Aufziehwerkzeugen 55 entfernt, so dass durch synchrones Drehen und Bewegen der Greiferachse längs einer Kreisbahn das Aufziehen eines Reifens mit Hilfe der Aufziehwerkzeuge 55 erfolgen kann.

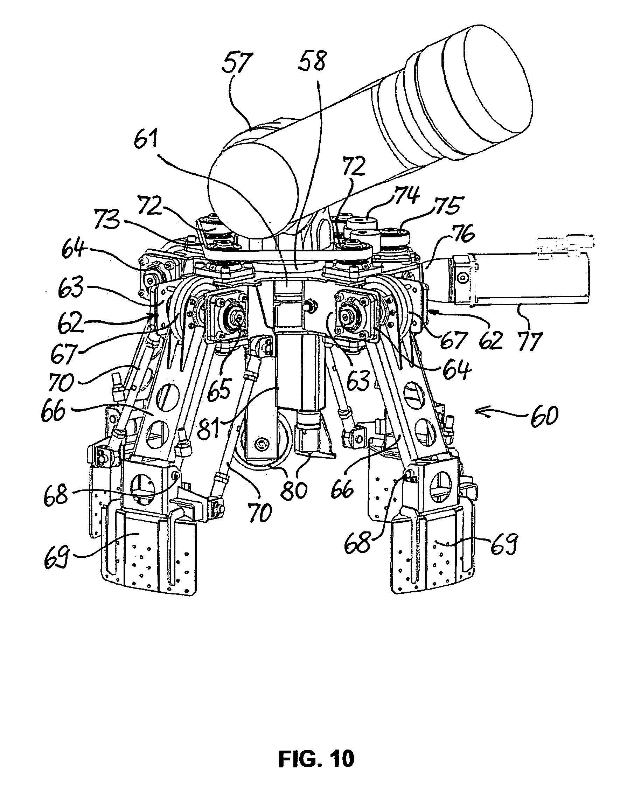

Eine weitere in Figur 10 gezeigte Ausführungsform weist einen Greifer 60 mit einem Grundkörper 61 auf, der an dem drehend antreibbaren Flansch 58 einer in drei Raumrichtungen bewegbaren Roboterhand 57 befestigt ist. Der Grundkörper 61 hat vier kreuzförmig angeordnete Arme 62, die sich in Bezug auf die mit der Drehachse des Flansches 58 zusammenfallende Mittelachse des Greifers 60 radial nach außen erstrecken und von jeweils zwei parallelen, in einem Abstand voneinander angeordneten Armplatten 63 gebildet sind. An den freien Enden der Armplatten 63 sind Lagergehäuse 64 angeordnet, wobei jeweils in zwei dem gleichen Arm 62 zugeordneten Lagergehäusen 64 eine Achse 65 drehbar gelagert ist, die den Zwischenraum zwischen den Armplatten 63 durchquert. Jede Achse 65 dient zur drehbaren Lagerung eines schwenkbaren Greiferarms 66. Hierzu ist auf jeder Achse 65 in der Mitte zwischen den Armplatten 63 ein Zahnrad 67 angeordnet, an dem ein gegabeltes Ende eines Greiferarms 66 mittels Schrauben befestigt ist. An den freien Enden der Greiferarme 66 sind mittels Drehgelenken 68 Greiferfinger 69 schwenkbar gelagert, wobei jeweils die gemeinsame Drehachse der Drehgelenke 68 eines Greiferarms 66 zur Achse 65 parallel ist, die den Greiferarm 66 lagert. Die Greiferfinger 69 sind außerdem durch parallel zu den Greiferarmen 66 angeordnete Lenker 70 von den Greiferarmen 66 entsprechender Länge mit den Armen 62 gelenkig verbunden. Hierdurch wird eine Parallelführung der Greiferfinger 69 bewirkt, durch welche die Greiferfinger 69 beim Schwenken der Greiferarme 66 ihre zur Mittelachse des Greifers 60 parallele Ausrichtung beibehalten.

Der Antrieb der Greiferarme 66 erfolgt über die Zahnräder 67. Jedes Zahnrad 67 ist mit einem Schneckenrad in Eingriff, das an dem Grundkörper 61 drehbar gelagert und abgestützt ist und durch ein mit dem Schneckenrad drehfest verbundenes Stirnrad 72 antreibbar ist. Der Antrieb der vier gleichen Stirnräder 72, die den vier Greiferarmen 66 zugeordnet sind, erfolgt über einen Zahnriemen 73, der um die Stirnräder 72 und über Umlenkrollen 74 umgelenkt um ein Treibrad 75 herum geführt ist. Durch den Zahnriemen 73 wird die Drehbewegung der Stirnräder 72 und der von diesen angetriebenen Schneckenräder synchronisiert und damit eine synchrone Bewegung der Greiferarme 66 erreicht. Das Treibrad 75 ist an einem zwischen zwei Armen 62 an dem Grundkörper 61 befestigten Winkelgetriebe 76 angeordnet und wird durch einen mit dem Winkelgetriebe 76 verbundenen Motor 77 angetrieben. Durch Steuerung des Motors 77 kann somit das Öffnen und Schließen des Greifers 60 bewirkt werden.

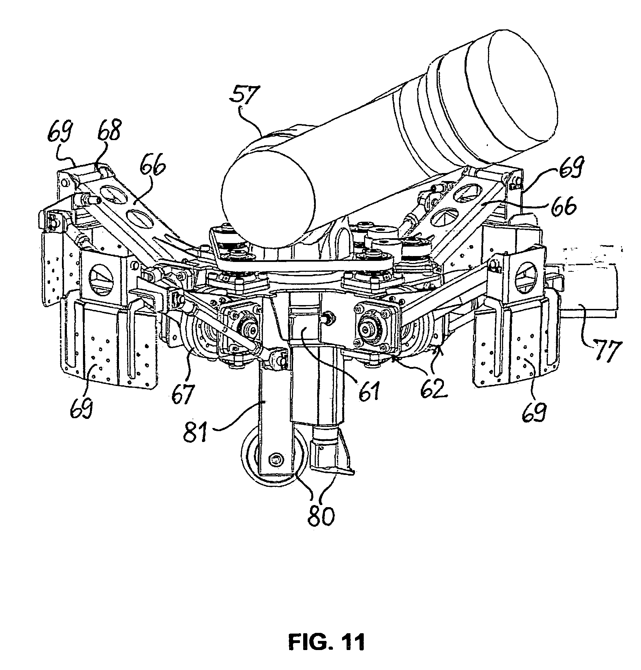

Durch die beschriebene Gestaltung des Greifers 60 und des Antriebs der Greiferarme 66 können die Greiferarme 66 einen großen Schwenkwinkel von über 90° durchfahren und insbesondere, wie in Figur 11 gezeigt, so weit nach oben in Richtung der Roboterhand 57 bewegt werden, dass die Greiferfinger 69 sich mit ihren Halteplatten in Höhe der Arme 62 des Grundkörpers 61 befinden.

Auf der der Roboterhand 57 abgekehrten Unterseite des Grundkörpers sind für die weiter oben beschriebene Montage des zweiten Reifenwulstes benötigte Aufziehwerkzeuge 80 an sich in Richtung der Mittelachse des Greifers 60 erstreckenden Säulen 81 befestigt. Die Säulen 81 können eine vergleichsweise geringe Länge und entsprechend große Steifigkeit haben, da die Greiferarme 66 und Greiferfinger 69 weit nach oben aus dem Arbeitsbereich unter dem Grundkörper 61 herausbewegt werden können. Die hierdurch erzielte große Steifigkeit der Säulen 81 ermöglicht eine genaue Führung der Aufziehwerkzeuge 80 und verringert die Gefahr einer Beschädigung der Felge und des Reifenwulstes bei der Montage. Weiterhin wird durch den geringeren Abstand, den die Aufziehwerkzeuge 80 von der Roboterhand 57 haben können, die Belastung des Antriebs der Roboterhand 57 und des Gelenkarms des Handhabungsroboters reduziert, was zu einer Verfahrensverbesserung und zu einer Steigerung der Lebensdauer des Handhabungsroboters beiträgt.

## Patentansprüche

1. Verfahren zur Montage eines Luftreifens auf eine Tiefbettfelge eines Fahrzeugrades, bei welchem der Luftreifen (R) in einer Bereitstellungsposition mittels eines an einem in drei Richtungen bewegbaren Gelenkarm eines Handhabungsroboters (1) angeordneten Greifers (2) an der Lauffläche erfasst, von dem Handhabungsroboter (1) an die in einer Spannvorrichtung (30) gehaltene Felge (F) herangeführt und durch eine kontrollierte Bewegung des den Luftreifen (R) haltenden Greifers (2) mit dem der Felge (F) zugekehrten ersten Reifenwulst über ein Felgenhorn der Felge (F) gestreift wird, **dadurch gekennzeichnet, dass** nach der Montage des ersten Reifenwulstes der Greifer (2) von dem Luftreifen (R) gelöst wird und der Reifen (R) mittels Stellgliedern, wie Reifenheber und Reifenschieber, die an der Spannvorrichtung (30) angeordnet sind, in eine Ausgangsposition für die Montage des zweiten Reifenwulstes mit Hilfe von Montagewerkzeugen bewegt wird, dass an dem Greifer (2) angeordnete Aufziehwerkzeuge (27, 28, 29) durch Bewegen des Greifers (2) in eine Arbeitsposition an der in der Spannvorrichtung (30) gehaltenen Felge (F) gebracht werden, danach der Reifenheber in seine Ausgangsposition abgesenkt wird und dass durch eine Drehbewegung des Greifers (2) um die Achse der Felge (F) die Aufziehwerkzeuge (27, 28, 29) an dem Felgenhorn entlang geführt werden und der zweite Reifenwulst mittels der Aufziehwerkzeuge (27, 28, 29) über das Felgenhorn gestreift wird.

2. Vorrichtung zur Montage eines Luftreifens auf eine Tiefbettfelge eines Fahrzeugrades, umfassend einen Handhabungsroboter (1) mit einem in drei Richtungen bewegbaren Gelenkarm, der an seinem freien Ende einen Greifer (2; 50; 60) mit wenigstens zwei radial zur Mittelachse des Greifers (2; 50; 60) bewegbaren Greiferarmen (13; 56; 66) zum Greifen und Halten von Luftreifen (R) aufweist, und eine Montagestation, die im Arbeitsbereich des Handhabungsroboters (1) angeordnet ist und Spannmittel (32) zum lösbaren Halten einer Felge (F) und Stellglieder, wie Reifenheber und Reifenschieber, zum Positionieren des Luftreifens (R) gegenüber der Felge (F) aufweist, wobei der Greifer (2; 50; 60) an dem Gelenkarm mit Hilfe von Stellantrieben um die Mittelachse (A6) und um wenigstens eine weitere Achse (A5) drehbar und in beliebigen Drehwinkelstellungen feststellbar ist, **dadurch gekennzeichnet, dass** an dem Greifer (2; 50; 60) Aufziehwerkzeuge (27, 28, 29; 55; 80) zum Aufziehen eines Reifenwulstes auf eine Felge (F) angeordnet sind und der Greifer (2; 50; 60) und gegebenenfalls der Gelenkarm mit Hilfe der Stellantriebe auf einer Kreisbahn derart bewegbar ist, dass die Aufziehwerkzeuge (27, 28, 29; 55; 80) an dem Felgenhorn der Felge (F) entlang geführt werden können.

3. Vorrichtung nach Anspruch 2, **dadurch gekennzeichnet, dass** die Aufziehwerkzeuge (27, 28, 29) an einem Greiferarm (13) angeordnet sind und dass die Greiferarme (13) in eine Schließstellung bewegbar sind, in der die freien Enden der Greiferarme (13) sich aneinander abstützen.

4. Vorrichtung nach einem der Ansprüche 2 oder 3, **dadurch gekennzeichnet, dass** an den freien Enden der Greiferarme (13) Haltemittel angeordnet sind, die in der Schließstellung der Greiferarme (13) derart ineinander greifen, dass eine Relativbewegung der Greiferarme (13) zu verhindert wird.

5. Vorrichtung nach Anspruch 4, **dadurch gekennzeichnet, dass** jeder Greiferarm (13) eine zur Mittelachse des Greifers (2) parallel ausgerichtete Halteplatte (19) mit in Richtung der Mittelachse verlaufenden Rändern aufweist, die mit Vorsprüngen (21) und Ausnehmungen (22) versehen sind, und dass die Hatteplatten (19) sich in der Schließstellung der Greiferarme (13) mit ihren Rändern aneinander abstützen, wobei die Vorsprünge (21) und Ausnehmungen (22) ineinander greifen und eine Relativbewegung der Halteplatten (19) verhindern.

6. Vorrichtung nach einem der Ansprüche 2 bis 5, **dadurch gekennzeichnet, dass** der Greifer (2) einen zentralen Grundkörper (10) aufweist, an dem die Greiferarme (13) gelagert sind, dass die Greiferarme (13) mit einer Synchronisiereinrichtung gekoppelt sind, welche ihre radiale Bewegung synchronisiert, wobei jeder Greiferarm (13) einen parallelen Lenker (16) hat, der jeweils durch Drehgelenke (17) mit einem Ende mit dem Grundkörper (10) und mit dem anderen Ende mit einem Greiferfinger (15) mit einer Halteplatte (19) derart drehbar verbunden ist, dass Greiferarm (13) und Lenker (16) eine Parallelführung für den Greiferfinger (15) und die Halteplatte (19) bilden.

7. Vorrichtung nach Anspruch 2, **dadurch gekennzeichnet, dass** die Greiferarme (56; 66) und die Werkzeuge (55; 80) zum Aufziehen eines Reifenwulstes an einem zentralen Grundkörper (53; 61) des Greifers (50; 60) angeordnet sind, dass die Werkzeuge (55; 80) biegesteif mit dem Grundkörper (53; 61) verbunden sind und dass die Greiferarme (56; 66) in eine gespreizte Stellung bewegbar sind, in der sie sich außerhalb des Arbeitsbereichs der Werkzeuge (55; 80) befinden.

8. Vorrichtung nach einem der Ansprüche 2 bis 7, **dadurch gekennzeichnet, dass** der Antrieb der Greiferarme (66) jeweils über ein Zahnrad (67) erfolgt, das koaxial zur Drehachse des Greiferarms (66) angeordnet und drehfest mit dem Greiferarm (66) verbunden ist.

9. Vorrichtung nach Anspruch 8, **dadurch gekennzeichnet, dass** das Zahnrad (67) ist mit einem Schneckenrad in Eingriff ist, das an dem Grundkörper (61) drehbar gelagert und abgestützt ist und durch ein mit dem Schneckenrad drehfest verbundenes Stirnrad (72) antreibbar ist,

10. Vorrichtung nach Anspruch 9, **dadurch gekennzeichnet, dass** die Stirnräder (72) des Antriebs der Greiferarme (66) mit einem Zahnriemen (73) in Eingriff sind, der um die Stirnräder (72) und um ein Treibrad (75) herum geführt ist, das durch einen Motor (77) antreibbar ist.

11. Vorrichtung nach Anspruch 10, **dadurch gekennzeichnet, dass** an dem Grundkörper (61) ein Winkelgetriebe (76) angeordnet ist, durch das der Motor (77) mit dem Treibrad (75) gekuppelt ist.

12. Vorrichtung nach einem der Ansprüche 2 bis 11, **dadurch gekennzeichnet, dass** die Handhabungsroboter (1) Belastungssensoren zur Erfassung der bei der Reifenmontage auftretenden Belastungen aufweist.

13. Vorrichtung nach einem der Ansprüche 2 bis 12, **dadurch gekennzeichnet, dass** die Handhabungsroboter (1) eine programmierbare Steuereinrichtung aufweist.

14. Vorrichtung nach Anspruch 13, **dadurch gekennzeichnet, dass** die Steuereinrichtung eine Überwachungseinrichtung aufweist, welche die Signale der Belastungssensoren überwacht.

## Claims

1. Method for mounting a pneumatic tyre on a drop base rim of a vehicle wheel, in which the pneumatic tyre (R) is gripped in a preparation position by a gripper (2) on the tread, which gripper (2) is arranged on an articulated arm, movable in three directions, of a handling robot (1), and is guided by the handling robot (1) to the rim (F), which is held in a fixing device (30), and the first tyre bead thereof, which faces the rim (F), is slipped over a flange of the rim (F) by controlled movement of the gripper (2), which holds the pneumatic tyre (R), **characterised in that** after the first tyre bead is mounted, the gripper (2) is released from the pneumatic tyre (R), and the tyre (R) is moved into an initial position for mounting the second tyre bead by adjustment members like tyre lift and tyre slide which are arranged on the fixing device (30), **in that** mounting tools (27, 28, 29) arranged on the gripper (2) are brought into a working position on the rim (F), which is held in the fixing device (30), by moving the gripper (2), then the tyre lift is lowered into its initial position, and **in that** the mounting tools (27, 28, 29) are guided along on the rim flange by rotating the gripper (2) about the axis of the rim (F), and the second tyre bead is slipped over the rim flange by the mounting tools (27, 28, 29).

2. Device for mounting a pneumatic tyre on a drop base rim of a vehicle wheel, comprising a handling robot (1), having an articulated arm, which can move in three directions and which comprises at the free end thereof a gripper (2; 50; 60) having at least two gripper arms (13; 56; 66), which can move radially relative to the central axis of the gripper (2; 50; 60), for gripping and holding pneumatic tyres (R), and a mounting station, which is arranged in the working region of the handling robot (1) and comprises gripping means (32) for releasably holding a rim (F) and adjustment members like tyre lift and tyre slide for positioning the pneumatic tyre (R) relative to the rim (F), wherein the gripper (2; 50; 60) is rotatable on the articulated arm about the central axis (A6) and about at least one further axis (A5) by means of actuating drives and is lockable on said arm in any desired angular positions of rotation, **characterised in that** attachment tools (27, 28, 29; 55; 80) for attaching a tyre bead to a rim (F) are arranged on the gripper (2; 50; 60), and the gripper (2; 50; 60) and optionally the articulated arm can be moved on a circular path by means of the actuating drives, in such a way that the attachment tools (27, 28, 29; 55; 80) can be guided along on the flange of the rim (F).

3. Device according to claim 2, **characterised in that** the attachment tools (27, 28, 29) are arranged on a gripper arm (13) and **in that** the gripper arms (13) can be moved into a closed position in which the free ends of the gripper arms (13) abut against one another.

4. Device according to either claim 2 or claim 3, **characterised in that** holding means are arranged at the free ends of the gripper arms (13), and engage with one another, preventing relative movement of the gripper arms (13), when the gripper arms (13) are in the closed position.

5. Device according to claim 4, **characterised in that** each gripper arm (13) comprises a holding plate (19), orientated parallel to the central axis of the gripper (2) and comprising edges which extend in the direction of the central axis and are provided with projections (21) and recesses (22), and **in that** the edges of the holding plates (19) abut against one another when the gripper arms (13) are in the closed position, the projections (21) and recesses (22) engaging with one another and preventing relative movement of the holding plates (19).

6. Device according to any one of claims 2 to 5, **characterised in that** the gripper (2) comprises a central base body (10) on which the gripper arms (13) are mounted, and **in that** the gripper arms (13) are coupled by a synchronisation device which synchronises the radial movement thereof, each gripper arm (13) having a parallel connecting rod (16), one end of each connecting rod being connected by hinges (17) to the base body (10) and the other end thereof being rotatably connected to a holding plate (19) by a gripper finger (15) in such a way that the gripper arm (13) and the connecting rod (16) form a parallel guide for the gripper finger (15) and the holding plate (19).

7. Device according to claim 2, **characterised in that** the gripper arms (56; 66) and the tools (55; 80) for attaching a tyre bead are arranged on a central base body (53; 61) of the gripper (50; 60), **in that** the tools (55; 80) are connected to the base body (53; 61) in a bending-resistant manner, and **in that** the gripper arms (56; 66) can be moved into a spread position in which they are positioned outside the working region of the tools (55; 80).

8. Device according to any one of claims 2 to 7, **characterised in that** the gripper arms (66) are each driven by a toothed wheel (67), which is arranged coaxial with the axis of rotation of the gripper arm (66) and rotationally engaged with the gripper arm (66).

9. Device according to claim 8, **characterised in that** the toothed wheel (67) is engaged with a worm wheel, which is rotatably mounted and supported on the base body (61) and can be driven by a cylindrical gear (72) which is rotationally engaged with the worm wheel.

10. Device according to claim 9, **characterised in that** the cylindrical gears (72) of the drive of the gripper arms (66) are engaged with a toothed belt (73), which is guided around the cylindrical gears (72) and around a drive wheel (75) which can be driven by a motor (77).

11. Device according to claim 10, **characterised in that** an angular gear (76), via which the motor (77) is coupled to the drive wheel (75), is arranged on the base body (61).

12. Device according to any one of claims 2 to 11, **characterised in that** the handling robot (1) comprises load sensors for detecting the loads occurring during tyre mounting.

13. Device according to any one of claims 2 to 12, **characterised in that** the handling robot (1) comprises a programmable control device.

14. Device according to claim 13, **characterised in that** the control device comprises a monitoring device which monitors the signals of the load sensors.

## Revendications

1. Procédé de montage d'un pneumatique sur une jante à base creuse d'une roue de véhicule, selon lequel le pneumatique (R) est saisi dans une position d'utilisation par la surface de roulement au moyen d'une pince (2) disposée sur un bras articulé d'un robot de manutention (1), lequel bras articulé est mobile dans trois directions, il est approché de la jante (F) retenue dans un dispositif de serrage (30) par le robot de manutention (1), et il est glissé avec le premier talon de pneu dirigé vers la jante (F) pardessus un rebord de la jante (F) par un mouvement contrôlé de la pince (2) retenant le pneumatique (R), **caractérisé en ce qu'**après le montage du premier talon de pneu, la pince (2) est détachée du pneumatique (R) et le pneumatique (R) est déplacé au moyen d'organes de mise en place, tels que des élévateurs de pneu et des poussoirs de pneu, lesquels sont disposés sur le dispositif de serrage (30), dans une position de départ pour le montage du second talon de pneu à l'aide d'outils de montage, **en ce que** des outils de pose (27, 28, 29) disposés sur la pince (2) sont amenés par le déplacement de la pince (2) dans une position de travail sur la jante (F) retenue dans le dispositif de serrage (30), puis l'élévateur de pneu est abaissé dans sa position de départ, et **en ce que**, par un mouvement rotatif de la pince (2) autour de l'axe de la jante (F), les outils de pose (27, 28, 29) sont guidés le long du rebord de la jante et le second talon de pneu est glissé au moyen des outils de pose (27, 28, 29) par-dessus le rebord de la jante.

2. Dispositif de montage d'un pneumatique sur une jante à base creuse d'une roue de véhicule, comprenant un robot de manutention (1) pourvu d'un bras articulé mobile dans trois directions, lequel présente à son extrémité libre une pince (2 ; 50 ; 60) pourvue d'au moins deux bras de pince (13 ; 56 ; 66) mobiles radialement par rapport à l'axe central de la pince (2 ; 50 ; 60) et destinés à saisir et à retenir le pneumatique (R), et une station de montage, laquelle est disposée dans la zone de travail du robot de manutention (1) et présente des moyens de serrage (32) destinés à retenir de façon réversible une jante (F) et des organes de mise en place, tels que des élévateurs de pneu et des poussoirs de pneu, destinés à positionner le pneumatique (R) par rapport à la jante (F), la pince (2 ; 50 ; 60) pouvant pivoter sur le bras articulé à l'aide de mécanismes d'entrainement autour de l'axe central (A6) et autour d'au moins un autre axe (A5) et pouvant être bloquée dans des positions d'angle de rotation quelconques, **caractérisé en ce que** des outils de pose (27, 28, 29 ; 55, 80) destinés à faire glisser un talon de pneu sur une jante (F) sont disposés sur la pince (2 ; 50 ; 60), et la pince (2 ; 50 ; 60) peut être déplacées, ainsi qu'éventuellement le bras articulé, à l'aide des mécanismes d'entrainement sur une trajectoire circulaire de telle sorte que les outils de pose (27, 28, 29 ; 55 ; 80) peuvent être guidés le long du rebord de la jante (F).

3. Dispositif selon la revendication 2, **caractérisé en ce que** les outils de pose (27, 28, 29) sont disposés sur un bras de pince (13) et **en ce que** les bras de pince (13) peuvent être déplacés dans une position de fermeture, dans laquelle les extrémités libres des bras de pince (13) s'appuient les unes sur les autres.

4. Dispositif selon l'une des revendications 2 ou 3, **caractérisé en ce que** des moyens de retenue sont disposés sur les extrémités libres des bras de pince (13), lesquels moyens de retenue, lorsque les bras de pince (13) se trouvent dans la position de fermeture, pénètrent les uns dans les autres de telle manière qu'un mouvement relatif des bras de pince (13) est empêché.

5. Dispositif selon la revendication 4, **caractérisé en ce que** chaque bras de pince (13) présente une plaque de retenue (19) orientée parallèlement à l'axe central de la pince (2) et pourvue de bords s'étendant en direction de l'axe central, ces bords étant munis de parties saillantes (21) et d'évidements (22), et **en ce que** les plaques de retenue (19), lorsque les bras de pince (13) se trouvent dans la position de fermeture, s'appuient les unes sur les autres par leurs bords, les parties saillantes (21) et les évidements (22) s'interpénétrant et empêchant un mouvement relatif des plaques de retenue (19).

6. Dispositif selon l'une des revendications 2 à 5, **caractérisé en ce que** la pince (2) présente un corps de base central (10) sur lequel les bras de pince (13) sont montés, **en ce que** les bras de pince (13) sont accouplés à un dispositif de synchronisation, lequel synchronise leur mouvement radial, chaque bras de pince (13) présentant une bielle parallèle (16) qui reliée pivotante respectivement au moyen d'articulations à charnière (17) par une extrémité au corps de base (10) et par l'autre extrémité à un doigt de pince (15) muni d'une plaque de retenue (19), de telle manière que le bras de pince (13) et la bielle (16) forment un guidage parallèle pour le doigt de pince (15) et la plaque de retenue (19).

7. Dispositif selon la revendication 2, **caractérisé en ce que** les bras de pince (56 ; 66) et les outils (55 ; 80) destinés à glisser un talon de pneu sont disposés sur un corps de base central (53 ; 61) de la pince (50 ; 60), **en ce que** les outils (55 ; 80) sont reliés de manière résistante à la flexion au corps de base (53 ; 61) et **en ce que** les bras de pince (56 ; 66) sont mobiles dans une position écartée, dans laquelle ils se situent à l'extérieur de la zone de travail des outils (55 ; 80).

8. Dispositif selon l'une des revendications 2 à 7, **caractérisé en ce que** l'entraînement des bras de pince (66) s'effectue respectivement au moyen d'une roue dentée (67), laquelle est disposée de manière coaxiale par rapport à l'axe de rotation du bras de pince (66) et est reliée solidaire en rotation au bras (66) de la pince.

9. Dispositif selon la revendication 8, **caractérisé en ce que** la roue dentée (67) est engrenée avec une roue hélicoïdale, laquelle est montée pivotante et est supportée sur le corps de base (61) et peut être entraînée par une roue droite (72) reliée solidaire en rotation à la roue hélicoïdale.

10. Dispositif selon la revendication 9, **caractérisé en ce que** les roues droites (72) de l'entraînement des bras de pince (66) sont engrenées avec une courroie dentée (73) qui est guidée autour des roues droites (72) et autour d'une roue motrice (75) qui peut être entraînée par un moteur (77).

11. Dispositif selon la revendication 10, **caractérisé en ce qu'**un engrenage conique (76), permettant d'accoupler le moteur (77) à la roue motrice (75), est disposé sur le corps de base (61).

12. Dispositif selon l'une des revendications 2 à 11, **caractérisé en ce que** le robot de manutention (1) est muni de capteurs de charge destinés à détecter les charges apparaissant lors du montage du pneu.

13. Dispositif selon l'une des revendications 2 à 12, **caractérisé en ce que** le robot de manutention (1) est muni d'un dispositif de commande programmable.

14. Dispositif selon la revendication 13, **caractérisé en ce que** le dispositif de commande comprend un dispositif de surveillance qui surveille les signaux des capteurs de charge.
